# EUROPEAN PATENT APPLICATION

(11) **EP 3 165 863 A1**
(43) Date of publication of application: **10.05.2017**
(21) Application number: 15003156.5
(22) Date of filing: 04.11.2015
(51) Int. Cl.: F28D 15/02, F23G 5/46

(54) **WASTE HEAT RECOVERY**

(71) Applicant: Linde Aktiengesellschaft, 80331 München (DE)
(72) Inventor: Carney, Stephen, Sylvania, Ohio 43560 (US); Ulmer, Sebastian, 81477 München (DE); Quist, René, 81245 München (DE)
(74) Representative: Gellner, Bernd

(57) **Abstract**

The invention relates to a method for pre-heating a fluid (140, 240, 340) by heat transfer from combustion gases (101) flowing through an exhaust duct (100) of a furnace, wherein the fluid (140, 240, 340) is supplied to a heat transfer device (120, 200, 300) which is in heat transfer contact with the combustion gases (101). At least a portion of the heat transfer device (120, 200, 300) is movably arranged relative to the exhaust duct (100) such that it can be moved into and out of the exhaust duct.

## Description

The invention relates to a method for pre-heating a fluid by heat transfer from combustion gases flowing through an exhaust duct of a furnace, wherein the fluid is supplied to a heat transfer device which is in heat transfer contact with the combustion gases. The invention further relates to a furnace with such a heat transfer device.

Heat exchanging systems are used for heat recovery from furnaces. Inside the furnace, combustion is conducted by a burner. The burner is supplied with one or more media, e.g. fuel, air, oxygen. Thermal energy of waste gases emerging from the combustion can be used to preheat those media supplied to the burner.

Existing waste heat recovery devices are normally designed as recuperators and predominantly located in the chimney of the furnace. Recuperators are designed to pre-heat combustion air and thus they are limited for use in air-fuel furnaces. A problem with recuperators is that they have limited operational time but cannot be maintained during furnace operation. Further, it is difficult or even impossible to bypass the recuperator.

Thus, it is an object of the invention to provide an improved heat transfer device which has increased operational life.

Another object is to provide an improved heat transfer device which allows to be bypassed and which can be maintained during furnace operation..

Another object is to provide a method for pre-heating gaseous fuel, combustion air and/or oxygen.

One or more of the above objects are achieved by a method according to claim 1 and by a heat transfer device according to claim 4.

According to the invention a fluid to be pre-heated is supplied to the heat transfer device. That fluid can be a fuel, in particular a gaseous fuel, and/or an oxidant, such as combustion air, oxygen-enriched air or pure oxygen. The heat transfer device is designed to be mounted to an exhaust duct of the furnace such that the waste heat of the combustion gases flowing through the exhaust duct can be used to pre-heat the fluid. The heat transfer device or a portion of the heat transfer device is movably arranged so that it can be moved into and out of the exhaust duct. By moving the heat transfer device or a portion of it into the exhaust duct the portion of the heat transfer device being in the exhaust duct is heated up by the combustion gases flowing through the exhaust duct. Part of the heat is transferred from the combustion gases to the portion of the heat transfer device and then transferred to the fluid supplied to the heat transfer device.

In its broadest sense the term "exhaust duct" shall mean the complete pipe system from the furnace to the outside atmosphere, including the chimney. The exhaust duct normally comprises additional components, for example filters or collectors.

In a preferred embodiment the heat transfer device is arranged in a portion of the exhaust duct which runs in a horizontal or nearly horizontal direction. Further, it is of advantage to arrange the heat transfer device at a location which is easy to access, for example at a height of less than 10 meters or less than 5 meters above ground. The heat transfer device can also be located underground.

According to the invention at least a portion of the heat transfer device can be moved into and out of the exhaust duct. Thus, the device can be removed from the exhaust duct and from the hot combustion gases and can be easily maintained or repaired.

Such maintenance can be carried out during the normal operation of the furnace as the removal of the portion of the heat transfer device out of the exhaust duct does not have a direct effect on the furnace operation. Only the pre-heating of the fluid is interrupted during maintenance of the heat transfer device. However, during the maintenance time it is for example possible to pre-heat the fluid by any other heating means if necessary or desired.

In one embodiment of the invention the heat transfer from the combustion gases flowing through the exhaust duct and the fluid to be pre-heated is achieved by using a heat pipe. A heat pipe is a heat-transfer device that utilizes the principles of thermal conductivity and phase transition. At the hot interface of the heat pipe a liquid heat transfer medium inside the heat pipe is vaporised. The vapor flows along the heat pipe to the cold interface and condenses back into a liquid whereby latent heat is released. The re-liquified heat transfer medium returns to the hot interface and the heat transfer cycle starts again.

The heat pipe is inserted into the exhaust duct so that one end of the heat pipe is in thermal contact with the hot combustion gases. The other end of the heat pipe is located outside the exhaust duct and in thermal contact with the fluid to be pre-heated. There could be a direct thermal contact between the heat pipe and the fluid or another heat transfer medium, either gaseous, liquid or solid, is used to transfer heat from the heat pipe to the fluid. In any case, heat is efficiently transferred from the combustion gases to the fluid to be pre-heated.

In another embodiment one or more double pipes are movably arranged in the exhaust duct such that they can be moved into and out of the exhaust duct. The term "double pipe" shall mean a pipe-in-pipe arrangement of two pipes or tubes. An inner pipe of smaller diameter is placed into an outer pipe of larger diameter.

In a preferred embodiment the inner and the outer pipe are straight or unbent pipes. In another embodiment the inner and/or the outer pipe have a U-type design. Preferably the inner pipe and the outer pipe are arranged coaxial to each other. But it is also possible that the inner and the outer pipe have different designs. For example, the outer pipe can be U-shaped whereas the inner pipe is straightened.

The outer pipe is preferably closed at one end. The inner pipe is open at both ends and a first end of the inner pipe is reset with respect to the closed end of the outer pipe. That means there is a gap between the first end of the inner pipe and the closed end of the outer pipe. The fluid to be pre-heated is supplied via the supply line to the second end of the inner pipe. The fluid travels through the inner pipe, leaves the inner pipe at its first end and enters through the gap the outer pipe. The fluid then flows back through the outer pipe. It is possible to introduce a small part of the fluid to be preheated directly into the outer pipe as long as the main portion of the fluid is passed through the inner pipe first. In that case the outer pipe might not be completely closed at its closed end but could be provided with an inlet for the fluid.

In principle, it is also possible to reverse the travel path of the fluid through the double pipe, i.e. it travels first through the outer pipe and then through the inner pipe. However, for the reasons explained below it is preferred to pass the fluid first through the inner pipe and then through the outer pipe.

The combustion gases in the exhaust duct may have a temperature in the range of 300 °C to 1800 °C and could be highly corrosive. The combustion gases may include substances like HCl, HF, SO₂, CO₂ or H₂O.

When the combustion gases come into thermal contact with the fluid via the heat transfer device, that fluid will be pre-heated as desired. But on the other hand the temperature of the combustion gases will decrease. If that heat exchange is not carried out in a proper way, the combustion gases are cooled down too much and water or acids present in the combustion gases can condense to the liquid phase. The condensed acids or corrosive combustion gases together with the water form highly aggressive acids which will damage the heat transfer device. Thus, it has to be taken care that the temperature of the heat transfer device surface which is in contact with the combustion gases remains above a critical temperature level which is typically about 200 °C.

Therefore, it has been found advantageous to pass the fluid first through the inner pipe. During its travel through the inner pipe the medium is slowly pre-heated by heat exchange with the medium flowing back through the outer pipe. When the medium reaches the outer pipe it is already pre-heated sufficiently so that the outer wall of the outer pipe will not be cooled down to a temperature which is below the critical temperature level. Thus, the combustion gases when in thermal contact with the heat transfer device do not experience too low temperatures, no water and no corrosive substances will condense and no aggressive acids will be formed.

In order to keep the temperature of the outer surface of the outer pipe above the critical temperature it is further possible to provide the outer pipe with a thermal insulation.

Typical exhaust duct diameters are in the range of 0,5 to 3 meters, preferably between 1 and 2,5 meter. The term "diameter" shall not only apply to circular exhaust ducts but shall also cover exhaust ducts of non-circular or non-regular shape with an equivalent diameter in the mentioned range. Typical lengths of the exhaust duct are preferably between 2 meter and 10 meters or even more than 10 meters.

The portion of the heat exchanger which is introduced into the exhaust duct may for example extend over 30% to 95 %, 50% to 90%, 60% to 90% or 70% to 90% of the exhaust duct diameter. Typically the portion of the heat exchanger located inside the exhaust duct has a minimum length of 0,25 m, 1,0 m or 1,5 m. Its maximum length is typically 1,0 m, 1,5 m or 3,0 m.

In one embodiment the outer diameter of the portion of the heat exchanger may be between 20 mm and 200 mm, between 30 mm and 80 mm or between 40 mm and 60 mm. The outer diameter determines the heat transfer area and thus the heat transfer. If a double pipe is used as heat exchanger, these ranges correspond to the outer diameter of the outer pipe.

The diameter of the inner pipe and/or the diameter of the annular gap between the inner and the outer pipe is preferably chosen so that the velocity of the fluid does not exceed a predefined maximum speed. For example, for safety reasons pre-heated gaseous oxygen should not flow faster than a certain maximum speed.

The portion of the heat transfer device is preferably oriented vertically. A vertical arrangement allows to suspend the heat transfer device or the portion of the heat transfer device and to easily lower it down and move it up for entering the exhaust duct or leaving the exhaust duct, respectively. Further, if the heat transfer device has an elongated form, for example as the described straightened double pipe, the bending torque or bending moment on the heat transfer device can be minimised.

In another embodiment an automated retraction system is provided for moving the heat exchanger or a portion of the heat exchanger into and out of the exhaust duct. The retraction system is preferably designed to be fail-safe, for example in case of an electrical power failure or electrical power outage. In such cases the retraction system must still be operable. Preferably, the retraction system automatically retracts the heat transfer device from the exhaust duct in case of emergency. The energy for retraction of the heat transfer device could for example be provided by means of gravity, by means of a pressurized gas storage, a counter weight or a separate stand-alone electric power source.

According to a further embodiment the heat transfer device comprises an inert gas supply line. In particular if a double pipe is used, the inert gas supply provides the capability to purge the double pipe for example prior to or after maintenance work. Further, the inert gas is preferably used to cool the double pipe in case the flow of the fluid to be pre-heated is completely disrupted or if for some reason the fluid flow is too small to guarantee a sufficient cooling of the double pipe.

The invention is preferably used in a furnace with one or more burners for pre-heating the oxidant supplied to the burner and/or to pre-heat the fuel supplied to the burner. In such a furnace the heat transfer device is preferably located upstream of any other waste heat recovery devices and any emission control devices.

The invention is preferably used to pre-heat an oxygen-containing gas, such as air, oxygen-enriched air or, especially preferred, technical pure oxygen with an oxygen content of at least 90 % by volume, of at least 95% by volume or at least 99% by volume.

Alternatively or in addition to pre-heating an oxygen containing gas, the invention can be used to pre-heat a fuel, especially a gaseous fuel such as natural gas. The preheated fluid(s) is/are preferably passed to a burner which is used for heating the furnace.

In many cases the furnace is provided with more than one burner. In that case it is preferred that the outlet of each heat transfer device is connected to only one burner. That means, the flow of pre-heated fluid is no more split into two or more sub streams but completely passed to one burner. The reason behind that is that in some cases the pre-heated fluid is difficult to handle and a branch off would have to be made of special and expensive material. For example, hot oxygen at temperatures above 200 °C, 300 °C or even 400 °C is highly reactive and has a high oxidability. Splitting pre-heated fuel or pre-heated air is less critical and, thus, if only fuel or air is pre-heated, it is possible to split the pre-heated fluid stream and pass it to two or more burners.

Depending on the size of the burner and on the size of the heat transfer device it might be necessary to have two or more heat transfer devices for pre-heating the oxygen containing gas or the fuel required for one burner. The two or more heat transfer devices can be arranged in parallel or in series or any combination of parallel and series arrangements. The pre-heated fluid streams from several heat transfer devices can be passed to the same burner and/or the preheated stream from a heat transfer device can be sent to another heat transfer device for further heating before it is passed to the burner. It is also possible to have three or more heat transfer devices connected in series for pre-heating the fluid prior to being transferred to the burner. In an embodiment of the invention between 1 and 30 heat transfer devices, preferably between 1 and 20 heat transfer devices, are connected to the same burner. Some of the heat transfer devices can be used to pre-heat an oxygen containing gas, in particular oxygen, others are used to pre-heat fuel. It is also possible to pre-heat the oxygen containing gas or the fuel containing gas only.

The invention is preferably used in a glass furnace as the combustion gases of a glass furnace often contain aggressive and/or corrosive gases. The invention can also be used with advantage in any other kind of industrial furnace, in particular when condensation of components of the combustion gases shall be prevented.

The invention as well as further details of the invention shall now be explained with reference to the accompanying schematic drawings.
- Figure 1 a and b: show a heat transfer device according to the invention using a heat pipe,
- Figure 2: shows a waste heat transfer device according to the invention using a double pipe and
- Figure 3: shows an alternative design of a waste heat transfer device of the double pipe design

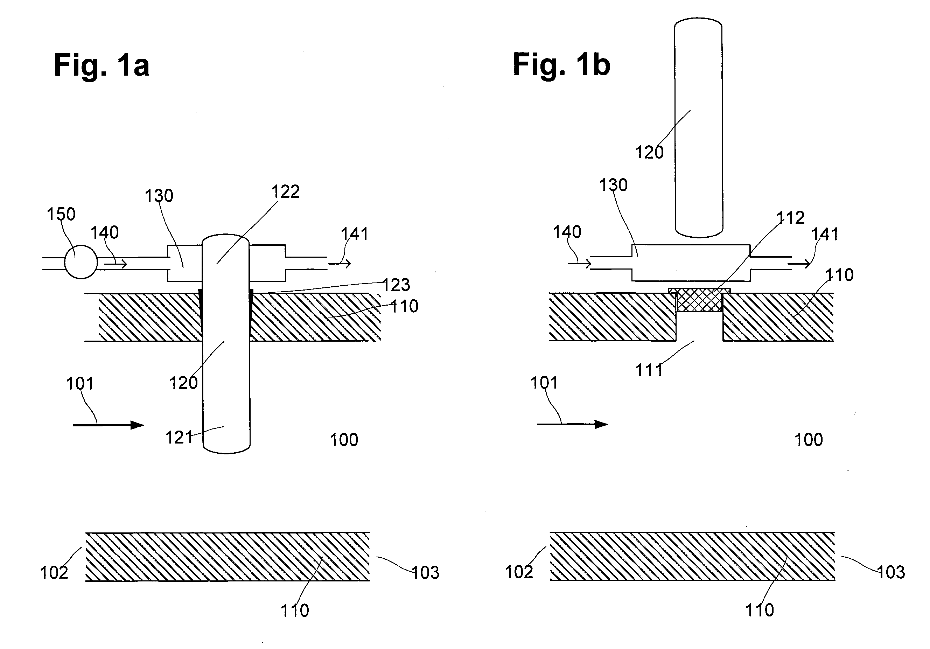

In figures 1a and 1b, a heat exchanging system according to a preferred embodiment of the invention is schematically shown in a sectional side view. Figures 1 a and 1 b show an exhaust duct 100 through which combustion gas 101 emerging from the combustion in a furnace (not shown) is exhausted.

At one end 102, the exhaust duct can especially be connected with an appropriate furnace. At another end 103, the exhaust duct can be provided with exhaust treatment components, further waste heat recovery devices and it can especially be connected with an appropriate chimney.

The exhaust duct 100 comprises a refractory element 110. The refractory element 110 is especially embodied as a wall of the exhaust duct 100. This wall 110 of the exhaust duct 100 is for example constructed by a multitude of bricks.

The exhaust duct 100 is provided with an opening 111 at its top side. A heat pipe 120 can be inserted into the opening 111 and moved into the exhaust duct 100. The heat pipe 120 is oriented vertically and fixed to an automated retraction mechanism (not shown) which allows to lift up and lower down the heat pipe 120. When inserted into the exhaust duct 100, the combustion gases 101 flow around the lower portion 121 of the heat pipe 120 and heat it up. The combustion gases typically have a temperature between 300 °C and 1800 °C. The heat is transferred from the combustion gases along the heat pipe 120 to its upper portion 122.

The upper portion 122 of the heat pipe 120 is in thermal contact with a heat exchanger 130. In this example, the heat exchanging system is used to pre-heat oxygen. Gaseous oxygen 140 is passed through the heat exchanger 130 and heated up by heat transfer from the heat pipe 120. The pre-heated oxygen gas 141 is then transferred to a burner for heating the furnace.

Instead of the heat exchanger 130 it is also possible to bring the upper portion 122 of the heat pipe 120 in direct contact with the oxygen 140.

The heat pipe 120 may be provided with a collar 123 which fits into the opening 111 in the wall of the exhaust duct 100 and which seals the heat pipe 120 in its seat in the opening 111.

The oxygen flow 140 into the heat exchanger 130 is controlled by flow control means 150 arranged upstream of the heat exchanger 130.

Additional heat pipes may be used to pre-heat additional oxygen streams or to pre-heat a gaseous fuel stream.

For maintenance the heat pipe 120 can be lifted up and retracted from the exhaust duct 100 (see figure 1 b). The opening 111 in the wall of the exhaust pipe 100 is closed by a plug 112 to avoid the escape of combustion gases 101. The oxygen flow 140 continues to flow through heat exchanger 130 even if it is no more pre-heated. Thus, maintenance of the heat pipe 120 can be done during continuous operation of the furnace.

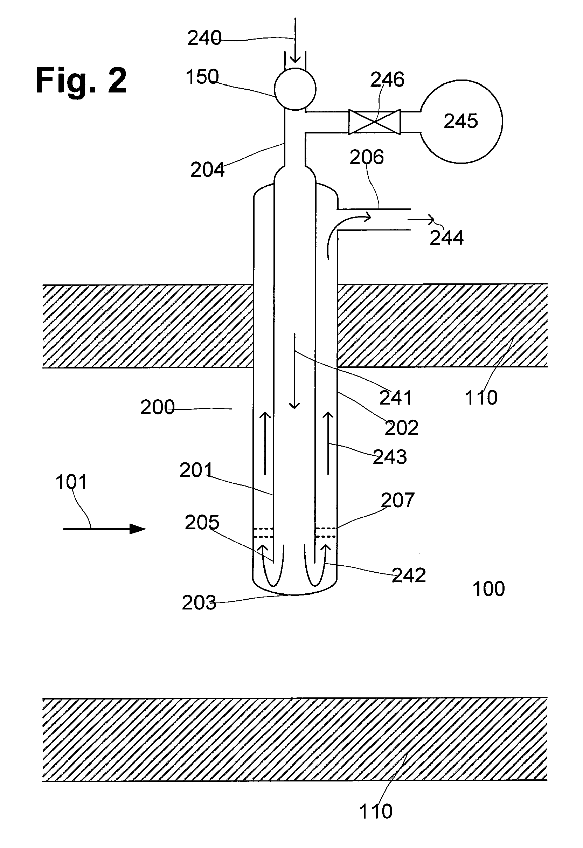

Figure 2 shows an alternative embodiment of the invention. The system according to figure 2 differs from the waste heat recovery system of figures 1 a and 1 b in that a double pipe 200 is used instead of a heat pipe.

The double pipe 200 is oriented with its axis in a vertical direction. The double pipe 200 comprises an inner pipe 201 and an outer pipe 202 coaxially arranged to each other. The outer pipe 202 has an outer diameter of between 30 mm and 100 mm. The inner pipe 201 has an outer diameter between 10 mm and 70 mm. The length of the outer pipe which is located inside the exhaust duct, that is the active heat transfer length is for example between 0,25 m and 2,5 m.

The outer pipe 202 is closed at its bottom end 203. The top end 204 of the inner pipe 201 is designed as inlet for the fluid to be pre-heated, for example for a cold or room-temperature oxygen stream. The bottom end 205 of the inner pipe 201 is open and terminates at a distance of for example 10 mm to 200 mm from the closed bottom end 203 of the outer pipe 202. In the side wall of the upper portion of the outer pipe 202 there is provided an outlet 206 for the pre-heated fluid.

Spacers 207 are provided in the annular gap between the outer pipe 202 and the inner pipe 201. The spacers 207 are preferably provided at a location in the lower third of the outer pipe 202. It is further advantageous to design the spacers 207 as swirling elements which cause a turbulent flow of the fluid passing the spacers 207.

As already explained with reference to figures 1a and 1b the double pipe 200 is also movably arranged in the wall 110 of the exhaust duct 100 such that it can be inserted into the exhaust duct 100 or be retracted from the exhaust duct 100.

In operation of the waste heat recovery system of figure 2 an oxygen stream 240 at ambient temperature is introduced into inlet 204 of the inner pipe 201. The oxygen stream flows down (241) the inner pipe 201, leaves (242) the inner pipe 201 at its bottom end 205, turns upwards and flows back (243) through the annular gap between the outer pipe 202 and the inner pipe 201. When having reached the top of the outer pipe 202 the oxygen stream 244 leaves the double pipe 200 through outlet 206.

During its flow down through the inner pipe 201 the oxygen stream 241 is in heat transfer contact with the oxygen stream 243 flowing upwards through the annular gap. Thereby, oxygen stream 243 is pre-heated to a temperature between 80°C and 150 °C. The oxygen stream then returns through the annular gap between the outer pipe 202 and the inner pipe 201. During this upward passage the oxygen stream 243 is in heat transfer contact with the combustion gases 101 flowing through the exhaust duct 100. Thereby, the oxygen stream 243 is further heated up to a temperature between 200 °C and 600 °C. The so pre-heated oxygen 244 leaves the double pipe 200 via outlet 206 and is passed to a burner.

Since the cold or room-temperature oxygen stream 240 does not come into direct contact with the wall of the outer pipe 202, that wall remains always at a high enough temperature so that water vapour as a component of the combustion gases does not condense at the wall. For example, the temperature of the wall of the outer pipe 202 is between 200 °C and 1100 °C close to the bottom end 203 of the outer pipe 202 and between 300 °C and 1100 °C at the upper end of the outer pipe 202.

An inert gas supply 245, such as a gaseous nitrogen storage, is also connected to the inlet of the inner pipe 201. In normal operation valve 246 is closed and only the fluid 240 to be pre-heated is passed to the inner pipe 201. If the flow of the fluid 240 is too low or if it is stopped at all, there is a considerable risk that the double pipe 200 is heated up too much and damaged. In this case valve 246 is opened and gaseous nitrogen is introduced into the inner pipe 201 and passed through the outer pipe 202 whereby the double pipe 200 is cooled.

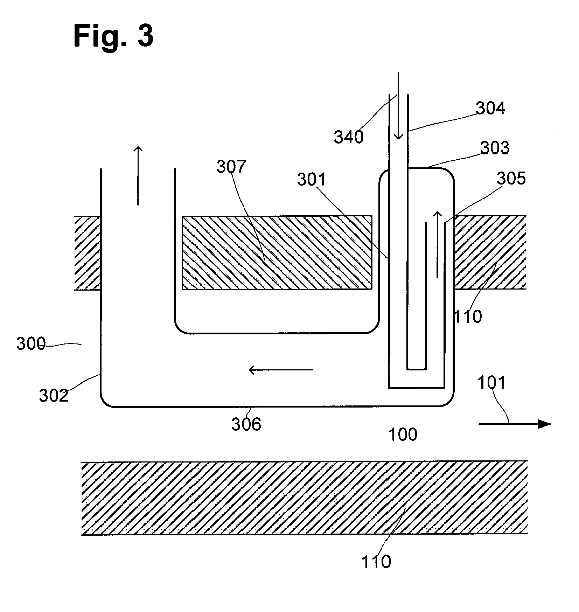

The inert gas supply 245 can also be used together with the embodiments of figures 1a, 1b and 3.

Figure 3 shows another design of a double pipe heat transfer device.

The outer pipe 302 of the double pipe 300 is of U-shape closed at one end 303. The inner pipe 301 is designed as inlet for the fluid 340 to be pre-heated, for example for a cold or room-temperature oxygen stream. The inner pipe enters the outer pipe 302 through the closed end 303. The inner pipe 301 is arranged in the vertical arm of the U-shaped outer pipe 302. The inner pipe 301 is also of U-type with its outlet 305 close to the closed end 303 of the outer pipe 302.

As explained with reference to figures 1a, 1b and 2 the double pipe 300 is also movably arranged in the wall 110 of the exhaust duct 100 such that it can be inserted into the exhaust duct 100 or be retracted from the exhaust duct 100. The refractory is provided with a removable cutout 307 in order to retract the double pipe 300 from the exhaust duct 100.

The operation of the waste heat recovery system of figure 3 is very similar to the one of figure 2. An oxygen stream at ambient temperature is introduced into inlet 304 of the inner pipe 301. The oxygen stream flows through the inner pipe 301, leaves the inner pipe 301 at its end 305, turns downwards and flows through the outer pipe 302.

The embodiment of figure 3 may in particular be used for pre-heating fluids, such as oxygen or fuel, if the exhaust duct has a small diameter only. The heat transfer length of the embodiment of figure 3 is not limited by the diameter of the exhaust duct 100 but can be simply increased by increasing the length of the basis 306 of the U-shaped outer pipe 302.

The invention has been described with respect to pre-heating oxygen. One skilled in the art will understand that the above examples can also be used to pre-heat fuel, air or any other fluid.

## Claims

1. Method for pre-heating a fluid (140, 240, 340) by heat transfer from combustion gases (101) flowing through an exhaust duct (100) of a furnace, wherein the fluid (140, 240, 340) is supplied to a heat transfer device (120, 200, 300) which is in heat transfer contact with the combustion gases (101),
**characterised in that**
at least a portion of the heat transfer device (120, 200, 300) is movably arranged relative to the exhaust duct (100) such that it can be moved into and out of the exhaust duct (100).

2. Method according to claim 1, **characterized in that** the fluid (140, 240, 340) is an oxygen-containing gas, especially an oxygen-containing gas with at least 90 % by volume oxygen, or a fuel, especially a gaseous fuel.

3. Method according to any of the preceding claims, **characterized in that** the heat transfer device (120, 200, 300) comprises a double pipe (200) with an inner pipe (201, 301) and an outer pipe (202, 302) and that the fluid (240) is first passed through the inner pipe (201) and subsequently through the outer pipe (202).

4. Furnace comprising
- an exhaust duct (100) to exhaust combustion gases (101) from the furnace,
- a heat transfer device (120, 200, 300) for pre-heating a fluid (140, 240, 340) by heat transfer from the combustion gases (101),
- the heat transfer device (120, 200, 300) comprising an inlet (204, 304) for the fluid (140, 240, 340) to be pre-heated and an outlet (206) for the pre-heated fluid,
**characterised in that**
at least a portion of the heat transfer device (120, 200, 300) is movably arranged relative to the exhaust duct (100) such that it can be moved into and out of the exhaust duct (100).

5. Furnace according to claim 4, **characterized in that** the heat transfer device (120) comprises a heat pipe (120) which is movably arranged such that it can be moved into and out of the exhaust duct (100).

6. Furnace according to claim 4 or 5, **characterized in that** an automated retraction system, preferably a fully-automated retraction system, is provided for moving the heat transfer device (120, 200, 300) or a portion of the heat transfer device (120, 200, 300) into and out of the exhaust duct (100).

7. Furnace according to any of claims 4 to 6, **characterized in that** the heat transfer device (120, 200) is oriented vertically.

8. Furnace according to any of claims 4 to 7, **characterized in that** the heat transfer device (200, 300) comprises at least one double pipe (200, 300) which is movably arranged such that it can be moved into and out of the exhaust duct (100).

9. Furnace according to claim 8, **characterized in that** the portion of the double pipe (200, 300) or the heat pipe (120) which is moved into the exhaust duct (100) has a length of at least 0,25 m, at least 1,0 m or at least 1,5 m.

10. Furnace according to claims 8 or 9, **characterized in that** the portion of the double pipe (200, 300) or the heat pipe (120) which is moved into the exhaust duct (100) has a length of maximum 1,0 m, maximum 1,5 m or maximum 2,0 m.

11. Furnace according to one of the claims 8 to 10, **characterized in that** the double pipe (200, 300) comprises an inner pipe (201, 301) and an outer pipe (202, 302) wherein the outer pipe (302) is closed at one end (303) and the inner pipe (301) is reset with respect to the closed end (303) of the outer pipe (302).

12. Furnace according to any of claims 4 to 11, further comprising an inert gas supply line (245) connected to the heat transfer device (120, 200, 300).

13. Furnace according to any of the claims 4 to 12, **characterized in that** more than one heat transfer device (120, 200, 300) is provided and that the furnace is provided with more than one burner and that the outlet of each heat transfer device (120, 200, 300) is connected to exactly one burner.

14. Furnace according to claim 13, **characterized in that** between 1 and 30, preferably less than 20, heat transfer devices per burner are provided.

15. Furnace according to any of claims 4 to 14, **characterized in that** the heat transfer device (120, 200, 300) is located upstream any other waste heat recovery devices and any emission control devices.
